(19)

**Europäisches Patentamt**
**European Patent Office**
**Office européen des brevets**

(11)    **EP 2 614 603 B1**

(12)    **EUROPEAN PATENT SPECIFICATION**

(45) Date of publication and mention
of the grant of the patent:
**27.12.2017 Bulletin 2017/52**

(21) Application number: **11767195.8**

(22) Date of filing: **08.09.2011**

(51) Int Cl.:
***H04L 27/26*** *(2006.01)*

(86) International application number:
**PCT/EP2011/065584**

(87) International publication number:
**WO 2012/032130 (15.03.2012 Gazette 2012/11)**

(54) **MULTI-CARRIER SYSTEM AND METHOD FOR USE IN AN OPTICAL NETWORK**

MEHRTRÄGERSYSTEM UND VERFAHREN ZUR VERWENDUNG IN EINEM OPTISCHEN NETZWERK

SYSTÈME À PORTEUSE MULTIPLE ET PROCÉDÉ ASSOCIÉ DESTINÉS À ÊTRE UTILISÉS DANS UN RÉSEAU OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2010 EP 10175752**

(43) Date of publication of application:
**17.07.2013 Bulletin 2013/29**

(73) Proprietor: **University College Cork - National University of Ireland, Cork Cork (IE)**

(72) Inventors:
• **ELLIS, Andrew**
  **Cork (IE)**
• **SYGLETOS, Stylianos**
  **Cork (IE)**
• **GARCIA GUNNING, Fatima Douglas Co. Cork (IE)**
• **FRASCELLA, Paola Cork (IE)**
• **IBRAHIM, Selwan Cork (IE)**
• **WEERASURIYA, Ruwan Cork (IE)**

(74) Representative: **Lucey, Michael PurdyLucey Intellectual Property 6-7 Harcourt Terrace D2 Dublin (IE)**

(56) References cited:
**WO-A1-96/19056       US-A1- 2003 219 258
US-A1- 2005 180 760     US-A1- 2006 133 527
US-A1- 2009 190 929**

• **KIM D H ET AL: "Ultrahigh-speed clock recovery with optical phase lock loop based on four-wave-mixing in a semiconductor optical amplifier", OPTICS COMMUNICATIONS, NORTH-HOLLAND PUBLISHING CO. AMSTERDAM, NL, vol. 182, no. 4-6, 15 August 2000 (2000-08-15), pages 329-334, XP004215622, ISSN: 0030-4018, DOI: 10.1016/S0030-4018(00)00837-3**
• **OSAMU KAMATANI ET AL: "Ultrahigh-Speed Clock Recovery with Phase Lock Loop Based on Four-Wave Mixing in a Traveling-Wave Laser Diode Amplifier", JOURNAL OF LIGHTWAVE TECHNOLOGY, IEEE SERVICE CENTER, NEW YORK, NY, US, vol. 14, no. 8, 1 August 1996 (1996-08-01) , XP011028619, ISSN: 0733-8724**

EP 2 614 603 B1

**(Cont. next page)**

- SHIEH W ET AL: "Experimental Demonstration of Transmission of Coherent Optical OFDM Systems", OPTICAL FIBER COMMUNICATION CONFERENCE AND EXPOSITION NATIONAL FIBER OPTIC ENGINEERS CONFERENCE. OFCNFOEC 2007, 25-29 MARCH 2007, ANAHEIM, CA, USA, IEEE, PISCATAWAY, NJ, USA, 1 March 2007 (2007-03-01), pages 1-3, XP031146572, ISBN: 978-1-55752-831-5
- HEALY ET AL.: "Multi-wavelength source using low drive-voltage amplitude modulators for optical communications", OPTICS EXPRESS, vol. 15, no. 6, 19 March 2007 (2007-03-19) , pages 2981-2986, XP002637451,
- WILLIAM SHIEH ET AL: "High spectral efficiency coherent optical OFDM transmission", COMMUNICATIONS AND PHOTONICS CONFERENCE AND EXHIBITION, 2009. ACP 2009. ASIA, IEEE, PISCATAWAY, NJ, USA, 2 November 2009 (2009-11-02), pages 1-6, XP031623270, ISBN: 978-1-55752-877-3

**Description**

**Field of the Invention**

The invention relates to a multi-carrier system and method for use in an Optical Network. In particular the invention relates to Optical Orthogonal Frequency Division Multiplexing (OFDM) and Coherent WDM multi-carrier systems.

**Background to the Invention**

Next generation optical networks require high capacity transponders based on multi-carrier systems, such as Optical Orthogonal Frequency Division Multiplexing (OFDM) and Coherent WDM. The major challenges will revolve around synchronisation in such networks, not only within the transmitter and receiver, but also to enable subcarriers (and subcarrier bands) add-drop multiplexers and subcarrier (and/or band) regeneration, amongst others.

Whilst in an ideal OFDM system, subcarrier orthogonality is ensured via ideal filtering, the filter requirements greatly constrain the implementation of these systems. For several alternative implementations of multi-carrier systems, such as Fast OFDM and Coherent WDM, monitoring of the channels relative phases is essential to maintain signal orthogonality. Furthermore, for a multi-carrier switching platform requiring access to individual subcarriers, phase alignment between neighbouring subcarriers would be advantageous, for example to enable signal processing using phase sensitive amplifiers. To maintain a specific phase relationship between subcarriers, phase adjustment should also be included in the add port of an OFDM switch, and represents a beyond the state-of-the-art architectural concept of ROADM architectures.

Each node in an optical network should enable an optimum flexibility in terms of add-drop capabilities, improve long-distance network transparency and reduce power consumption. In addition, the multi-band OFDM should offer flexible aggregation/disaggregation capabilities targeting applications for converged access, metro and core networks. In the case of ideal OFDM, the orthogonality condition is often implemented in the electronic domain through fast Fourier transform algorithms.

In the case of Coherent WDM (CoWDM), which is an all-optical real-time implementation, the orthogonality loss associated with imperfect filtering is restored by phase stabilization within the transmitter. Whilst On-Off Keying (OOK) CoWDM has been already stabilized in different ways, the absence of a carrier signal or tone in, for example, the differential phase shift keying (DPSK) makes it problematic to track and lock the optical phase.

At the receiver, even for ideal OFDM implemented using FFT, it is necessary to recover the carrier phase in order to correctly decode the data signals. If each subcarrier is phase coherent with its neighbour, then the performance may be enhanced by averaging the estimated phase over a number of subcarriers, or a subset of subcarriers may be used to estimate the phase.

A paper published by Shieh W. Et al, OFC 2007, entitled 'Experimental Demonstration of transmission of Coherent Optical OFDM Systems', discloses a coherent optical OFDM system where the carrier phase is recovered by transmitting so called pilot tones (subcarriers with no data modulation) for phase recovery, either as "residual main carrier tone" or "pilot subcarrier tone". This approach requires additional bandwidth, and so reduces the overall information carrying capacity of the channel.

As an alternative to spectral overhead, PCT Patent publication number WO96/19056, assigned to HD Divine, discloses a method of using training symbols (or "chirped symbols"). However this adds temporal overhead to the system which also reduces the overall information carrying capacity of the system.

US patent publication number US2005/180760, Feced et al, discloses an optical receiver that demodulates optical orthogonal frequency division multiplexed signals and generates a number of subcarrier reference signals in the electrical/digital domain using a phase reference generator.

The carrier phase of each subcarrier is vital for correct demodulation of the signal, and may be degraded by many effects, such as laser line-width, and nonlinear effects in the transmission fibre. Several authors have examined methods to mitigate these effects, such as US patent publication number US2009/190929, Khurgin et al, where methods are disclosed to compensate for nonlinear penalties by modifying the phase of the received signal by a signal proportional to the received power. However, this reduction in phase distortion is always in addition to the recovery of the carrier phase itself.

Heretofore no solution has been developed to monitor fluctuations in the phase and/or frequency for optical OFDM networks without the use of overhead in the spectral or temporal domains. Furthermore, those techniques disclosed to date require the deployment of a substantially complete receiver subsystem.

US Patent No. US 2003/219258 discloses an apparatus for recovering clock pulses of wavelength divisional multiplexed optical signals.

It is an object of the invention to provide a multi-carrier system and method for an optical network to monitor for phase and/or frequency fluctuations which may be deployed in the transmitter to ensure stable phase relationships between subcarriers, or at the receiver to ensure correct subcarrier de-multiplexing and data demodulation.

## Summary of the Invention

According to the present invention there is provided, as set out in the appended claims, a multi-carrier system for use in an optical network adapted to transmit and/or receive a carrier-less signal, said system comprising:

means for tapping the carrier-less signal and combining with at least one non-linear carrier component supplied from a laser device;
means for passing the combined signal through a non-linear element to output a plurality of subcarrier signals;
means for filtering the plurality of subcarrier signals to provide subcarriers dependent on the original carrier-less signal; and
means for recovering a clock signal from the filtered subcarriers.

The recovered clock signal can be processed and re-used for new generation of same frequency spacing subcarriers (and phase-locked) to the original carrier-less signal. Any fluctuations of both frequency and the phase from the original phase-synchronised signal are transferred also to the clock signal, and therefore, using appropriate feedback electronics, compensation can be simply provided at a transmitter/receiver. The invention enables phase alignment, clock recovery, carrier recovery, add/drop, and regeneration of multi-carrier systems, such as digital OFDM and all-optical OFDM, including phase sensitive schemes such as Coherent WDM, fast OFDM and offset QPSK Coherent WDM. Applications of the invention include an all optical OFDM receiver, a switchable OFDM regenerator, frequency slot allocation interchanger, clock recovery and synchronous sampling.

In one embodiment there is provided means for determining the frequency and the phase change between transmitted or received subcarriers from said recovered clock signal.

In one embodiment said means for determining comprises a four wave mixer.

In one embodiment the filtered signals are dependent on the original frequency of the signal and phase difference between subcarriers such that the clock signal can be recovered.

In one embodiment the non-linear element comprises a non-linear optical fibre or a semiconductor optical amplifier.

In one embodiment there is provided an optical amplifier adapted to amplify the combined signal and passing the amplified combined signal into said non-linear element.

In one embodiment the means for recovering comprises detecting idler signals and determining a beating signal between adjacent idler signals sensitive to the phase relationship of input signals and providing an error signal for phase sensitive applications.

In one embodiment there is provided means for compensating the signal by using the clock signal for new generation of same frequency spacing subcarriers and phase-locked to an original phase-synchronised signal in the network.

In one embodiment the means for compensating comprises a feedback loop to a transmitter, and the clock signal is adapted to compensate for fluctuations of both frequency and phase from the original phase-synchronised signal.

In one embodiment there is provided means for recovering multiple phase-synchronised subcarriers comprises phase synchronization subsystem and a comb signal generation.

In one embodiment the comb generation and phase synchronization subsystem comprises an injection locked laser and cascaded MZ amplitude modulator.

In one embodiment the injection locked laser generates at least one new subcarrier signal, which is phase coherent with the recovered carrier signal.

In one embodiment said injection locked laser is adapted to select and amplify the recovered carrier as well as to improve the OSNR level and mitigate against any degradation in the signal.

In one embodiment the means for generating comprises a PLL circuit adapted to stabilize said subcarriers against unwanted frequency and phase drifts.

In one embodiment the laser is adapted to generate a comb spectrum and phase synchronized by a bandwidth optical PLL circuit.

In one embodiment the bandwidth optical PLL circuit comprises a single sideband modulator adapted to synchronize simultaneously the subcarrier signals.

In one embodiment there is provided a frequency slot allocation interchanger.

In one embodiment there is provided a four wave mixer adapted to recover phase information from adjacent subcarriers enabling generation of an error signal for phase optimisation.

In another embodiment of the invention there is provided a method for use in an optical network adapted to transmit and/or receive signals, said method comprising the steps of:

tapping the carrier-less signal and combining with at least one non-linear carrier component supplied from a laser device;
passing the combined signal through a non-linear element to output a plurality of subcarrier signals;
filtering the plurality of subcarrier signals to provide subcarriers dependent on the original carrier-less signal; and
recovering a clock signal from the filtered subcarriers.

In a further embodiment there is provided a phase stabilisation feedback system for use in an optical network adapted to transmit and/or receive carrier-less signals, said system comprising:

means for tapping the carrier-less signal and combining with at least one non-linear carrier component supplied from a laser device;
means for passing the combined signal through a non-linear element to output a plurality of subcarrier signals;
means for filtering the plurality of subcarrier signals to provide subcarriers dependent on the carrier-less signal; and
means for recovering a clock signal from the filtered subcarriers.

There is also provided a computer program comprising program instructions for causing a computer program to carry out the above method which may be embodied on a record medium, carrier signal, read-only memory or digital signal processing platform.

## Brief Description of the Drawings

The invention will be more clearly understood from the following description of an embodiment thereof, given by way of example only, with reference to the accompanying drawings, in which:-

Figure 1 illustrates a carrier and clock recovery scheme, according to a preferred embodiment of the invention;
Figure 2a to 2c illustrates a number of different applications for the clock recovery according to different implementations of the invention;
Figure 3 illustrates a detailed diagram of the phase locking and synchronisation and subsequent comb generation;
Figure 4 illustrates a detailed diagram of the phase locking and synchronisation and subsequent comb generation;
Figure 5 illustrates representation of signals and pump, and the four wave mixing components (idlers);
Figure 6 illustrates (a) Input BPSK spectrum. (b) Four wave mixed spectrum at HNLF output;
Figure 7 illustrates the four wave mixing results for multiple carrier-less data signals (two subcarriers separated by $\delta f$) and respective idlers separated by $2 \cdot \delta f$;
Figure 8(a) and (b) illustrates an embodiment of a DPSK CoWDM system according to the present invention, which employs the proposed phase stabilization feedback by recovering the clock signal and tracking the frequency and phase changes;
Figure 9(a)-(c) illustrates graphical representations of (a) Optical spectrum of the transmitted CoWDM DPSK signal. (b) Optical spectrum at the output of HNLF (c) Simulated error signal versus phase difference of adjacent CoWDM subcarriers in VPI Transmission Maker; and
Figure 10(a) to (c) illustrates (a) BER measurement for the seven CoWDM subcarriers, each carrying 42.66 Gbit/s DPSK. (b) BER versus the stabilized error signal for three of the seven subcarriers. (c) Eye diagrams for each subcarrier at maximum total received power.

## Detailed Description of the Drawings

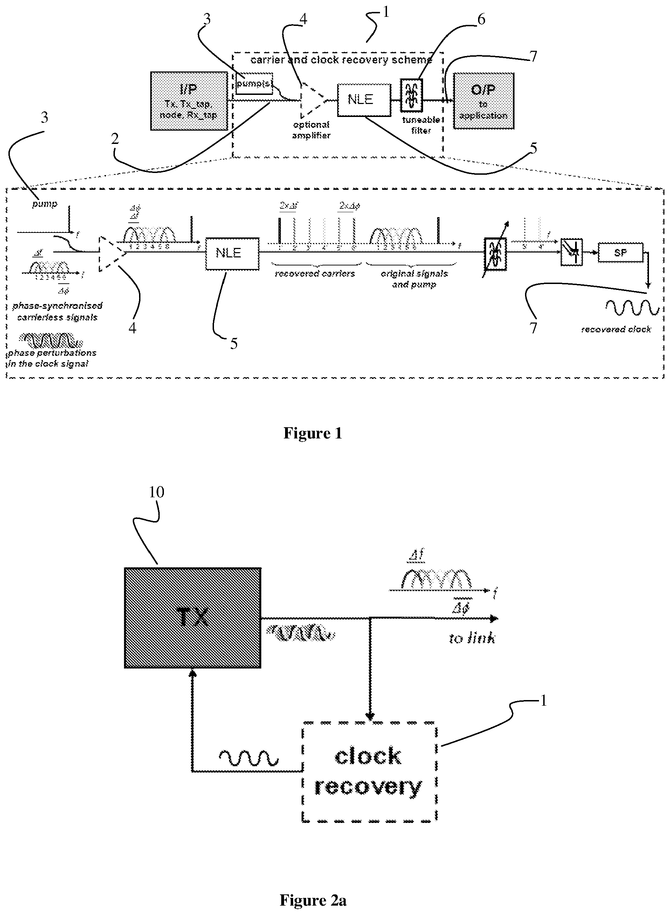

Referring now to Figure 1, Figure 1 illustrates a carrier and clock recovery scheme for use in an optical communication network, according to a preferred embodiment of the invention indicated generally by the reference numeral 1. A tap 2 from a transmitted phase-synchronised carrier-less signal (such as, for example, a single Coherent WDM band, with subcarriers separated by $\Delta f$ and with a $\Delta \phi$ phase relationship) is combined with a signal from a laser 3, for example a cw pump laser 3. The pump laser 3 will act as an active role in providing the nonlinear carrier components. The optical power may be boosted by a high power optical amplifier 4 prior to launch to a nonlinear element (NLE) 5, as, for example, a highly nonlinear optical fibre or a semiconductor optical amplifier (SOA). The output of the NLE 5 will be therefore comprised of the pump and original signals, and other idler components (which will be described in detail in the clock-recovery section below), including the recovered subcarriers from the original signal.
This signal can then be filtered by a filter 6, so only the subcarriers idlers under interest are detected, which are dependent on the original frequency of the signal and phase difference between subcarriers. Figure 1 shows, as an example, when only two subcarriers are required and, after detection and processing of the signal, a clock signal 7 is recovered. The clock recovered signal will have a frequency $2 \cdot \Delta f$ and phase $2 \cdot \Delta \phi$.

The clock signal can be used for a variety of applications, including:

(a) estimation of frequency and phase errors in an OFDM transmitter enabling the establishment of control loops to maintain these quantities at their optimum value,
(b) synchronisation in a receiver providing the optimum sampling clock frequency and phase, and providing a phase reference for data decoding, and
(c) processing and generation of new subcarriers with identical frequency spacing (and phase-locked) as the original signal, which is important for node-like applications such as add-drop multiplexers. Any fluctuations of both $\Delta f$ and $\Delta \phi$ from any pair of phase-synchronised subcarriers are transferred also to the clock signal resulting from the beat frequency between the two corresponding four wave mixing products, and therefore, using appropriate feedback electronics, compensation can be provided at the transmitter.

Example implementations of the system are shown in Figures 2a to 2c, where variation of the phase difference between adjacent subcarriers in the transmitter can be monitored and compensated using the system.

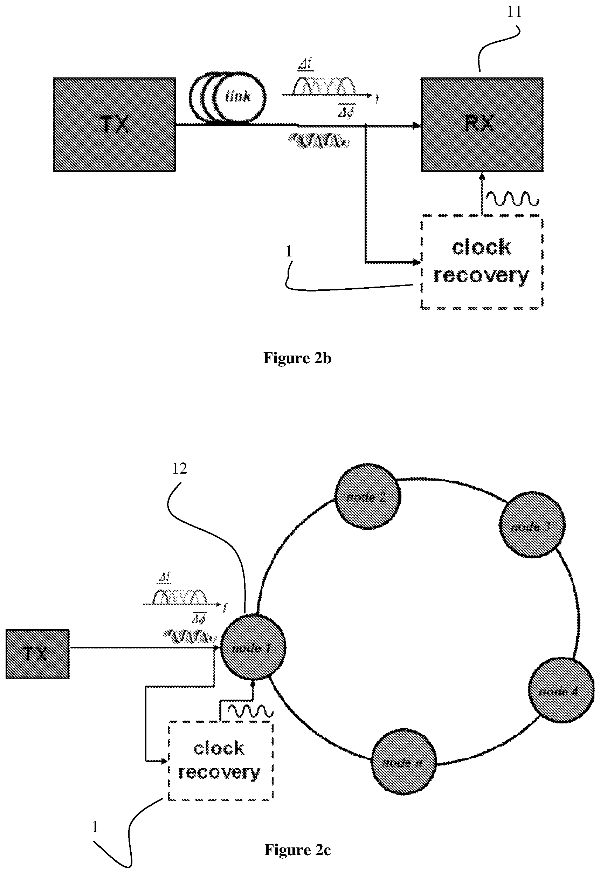

Figure 2a shows clock and phase recovery scheme 1 to compensate for phase variations at a transmitter side 10. Figure 2b illustrates how clock, frequency and phase recovery to be implemented at a receiver 11 which is critical for both direct and coherent detection. Figure 2c illustrates clock, frequency and phase recovery for synchronisation at a network node 12. Critical for add/drop multiplexers.

## 1. Carrier extraction schemes from carrier-less OFDM signals

Carrier recovery remains an important challenge due to the fact that coherent modulation formats including phase shift keying (PSK) are carrier suppressed in nature. Without the presence of the optical carrier, the most straightforward phase recovery techniques, including injection locking and optical phase lock loops (OPLLs) cannot be applied directly.

## 2. Multiple subcarrier generation and phase synchronization

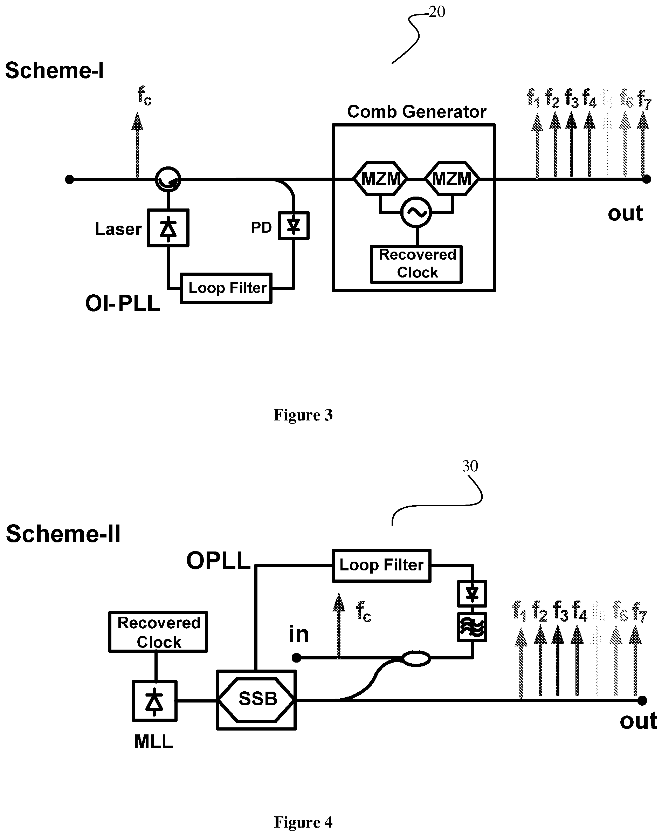

In one embodiment the recovered carrier can be used as a reference to synchronize multiple new subcarriers before impinging the information and inserting them into the backbone network. This process ensures phase coherency of the each new subcarrier with the other signals in the through path. The exact orthogonal condition (of $\pi/2$ phase shift) can be achieved by additional low bandwidth OPLL circuits at the final stage of the carrier selectable source unit. This dual functionality differentiates the all-optical OFDM switch that for the first time with the traditional add/drop multiplexing architectures of D/WDM. Two different approaches to perform the OPLL for phase synchronization followed by subcarrier generation are shown in Figures 3 and 4.

Figure 3 illustrates a phase synchronization and comb generation subsystem based on an optical injection PLL and cascaded MZ amplitude modulators, indicated generally by the reference numeral 20. Through injection locking of a laser, for example a narrow line width laser such as a MLL laser, a new subcarrier is generated, which is phase coherent with the one resulted from the carrier recovery process. Injection locking is required to select and amplify the recovered carrier as well as to improve its OSNR level that might have been degraded by the previous processes. Additional control by a slow PLL circuit can be used to stabilize against environmentally induced frequency drifts. The recovered carrier will be subsequently replicated in frequency by two cascaded amplitude MZM driven at the frequency spacing required between the subcarrier, for example at 12.6 GHz.

Figure 4 illustrates a laser, for example a narrow line width laser such as a MLL laser adapted to generate a large comb spectrum that can be phase synchronized by a large bandwidth optical PLL circuit driving a single sideband modulator to generate directly the phase-synchronized subcarriers, indicated generally by the reference numeral 30. This technique presents several advantages compared to the use of a set of single mode distributed feedback (DFB) lasers. For instance, the channel spacing is determined by the mode spacing of the MLL and the generated lines are coherent. A high bandwidth optical PLL circuit driving a single sideband modulator (SSB) will be subsequently used to synchronize simultaneously all the lines of the comb.

## 3. Clock Recovery

The most important aspect of the invention is the recovery of the clock signal, as described with respect to Figure 1 above. Optical fibres can allow a carrier-less signal (centred at $f_0$ or $\omega_0$) to be converted into a carrier-enabled signal by four-wave mixing (FWM). Such effects can also be generated by other nonlinear media, such as semiconductor amplifiers, amongst others. Considering, for generality, that the total optical field can be defined as:

$$\vec{E} = \vec{E}_1 + \vec{E}_2 + \vec{E}_3$$

Where $\vec{E}_1$ and $\vec{E}_2$ are data signals and $\vec{E}_3$ is a strong pump signal. Considering only the propagation direction $(\vec{z})$, $\vec{E}_1$, $\vec{E}_2$ and $\vec{E}_3$ can be therefore written as:

$$E_1 = A_1 \cdot e^{-i(\omega_1 \cdot t - \varphi_1)} + A_1^* \cdot e^{+i(\omega_1 \cdot t - \varphi_1)}$$

$$E_2 = A_2 \cdot e^{-i(\omega_2 \cdot t - \varphi_2)} + A_2^* \cdot e^{+i(\omega_2 \cdot t - \varphi_2)}$$

$$E_3 = A_3 \cdot e^{-i(\omega_3 \cdot t - \varphi_3)} + A_3^* \cdot e^{+i(\omega_3 \cdot t - \varphi_3)}$$

Accordingly to the nonlinearity theory in optical fibres, the nonlinear dielectric polarisation is therefore given by:

$$P_{NL} = \varepsilon_0 \cdot \chi^{(3)} \cdot \left(E_1 + E_2 + E_3\right)^3$$

By expanding the cubic term using a software package, for example Mathematica, the following expression appears (here *w* means $\omega$ and *p* means $\varphi$):

$$e^{-3\,i[t\,w1-p1]}A1^3 + 3\,A2\,e^{-2\,i[t\,w1-p1]-i[t\,w2-p2]}A1^2 + 3\,A3\,e^{-2\,i[t\,w1-p1]-i[t\,w3-p3]}A1^2 + 3\,e^{-i[t\,w1-p1]}A1^*\,A1^2 +$$
$$\boxed{3\,e^{i[t\,w2-p2]-2\,i[t\,w1-p1]}A2^*\,A1^2} + \boxed{3\,e^{i[t\,w3-p3]-2\,i[t\,w1-p1]}A3^*\,A1^2} + 3\,A2^2\,e^{-i[t\,w1-p1]-2\,i[t\,w2-p2]}A1 +$$
$$3\,A3^2\,e^{-i[t\,w1-p1]-2\,i[t\,w3-p3]}A1 + 6\,A2\,A3\,e^{-i[t\,w1-p1]-i[t\,w2-p2]-i[t\,w3-p3]}A1 + 3\,e^{i[t\,w1-p1]}(A1^*)^2\,A1 +$$
$$\boxed{3\,e^{2\,i[t\,w2-p2]-i[t\,w1-p1]}(A2^*)^2\,A1} + \boxed{3\,e^{2\,i[t\,w3-p3]-i[t\,w1-p1]}(A3^*)^2\,A1} + 6\,A2\,e^{-i[t\,w2-p2]}A1^*\,A1 + 6\,A3\,e^{-i[t\,w3-p3]}A1^*\,A1 +$$
$$6\,A2\,e^{-i[t\,w1-p1]}A2^*\,A1 + \boxed{6\,A3\,e^{-i[t\,w1-p1]+i[t\,w2-p2]-i[t\,w3-p3]}A2^*\,A1} + 6\,e^{i[t\,w2-p2]}A1^*\,A2^*\,A1 + 6\,A3\,e^{-i[t\,w1-p1]}A3^*\,A1 +$$
$$\boxed{6\,A2\,e^{-i[t\,w1-p1]-i[t\,w2-p2]+i[t\,w3-p3]}A3^*\,A1} + 6\,e^{i[t\,w3-p3]}A1^*\,A3^*\,A1 + \boxed{6\,e^{-i[t\,w1-p1]+i[t\,w2-p2]+i[t\,w3-p3]}A2^*\,A3^*\,A1} +$$
$$A2^3\,e^{-3\,i[t\,w2-p2]} + 3\,A2\,A3^2\,e^{-i[t\,w2-p2]-2\,i[t\,w3-p3]} + 3\,A2^2\,A3\,e^{-2\,i[t\,w2-p2]-i[t\,w3-p3]} + A3^3\,e^{-3\,i[t\,w3-p3]} +$$
$$e^{3\,i[t\,w1-p1]}(A1^*)^3 + e^{3\,i[t\,w2-p2]}(A2^*)^3 + e^{3\,i[t\,w3-p3]}(A3^*)^3 + 3\,A2\,e^{2\,i[t\,w1-p1]-i[t\,w2-p2]}(A1^*)^2 + 3\,A3\,e^{2\,i[t\,w1-p1]-i[t\,w3-p3]}(A1^*)^2 +$$
$$3\,A2\,e^{i[t\,w2-p2]}(A2^*)^2 + 3\,A3\,e^{2\,i[t\,w2-p2]-i[t\,w3-p3]}(A2^*)^2 + 3\,e^{i[t\,w1-p1]+2\,i[t\,w2-p2]}A1^*\,(A2^*)^2 + 3\,A3\,e^{i[t\,w3-p3]}(A3^*)^2 +$$
$$\boxed{3\,A2\,e^{2\,i[t\,w3-p3]-i[t\,w2-p2]}(A3^*)^2} + 3\,e^{i[t\,w1-p1]+2\,i[t\,w3-p3]}A1^*\,(A3^*)^2 + 3\,e^{i[t\,w2-p2]+2\,i[t\,w3-p3]}A2^*\,(A3^*)^2 +$$
$$3\,A2^2\,e^{i[t\,w1-p1]-2\,i[t\,w2-p2]}A1^* + 3\,A3^2\,e^{i[t\,w1-p1]-2\,i[t\,w3-p3]}A1^* + 6\,A2\,A3\,e^{i[t\,w1-p1]-i[t\,w2-p2]-i[t\,w3-p3]}A1^* +$$
$$3\,A2^2\,e^{-i[t\,w2-p2]}A2^* + 3\,A3^2\,e^{i[t\,w2-p2]-2\,i[t\,w3-p3]}A2^* + 6\,A2\,A3\,e^{-i[t\,w3-p3]}A2^* + 3\,e^{i[t\,w1-p1]+i[t\,w2-p2]}(A1^*)^2\,A2^* +$$
$$6\,A2\,e^{i[t\,w1-p1]}A1^*\,A2^* + 6\,A3\,e^{i[t\,w1-p1]+i[t\,w2-p2]-i[t\,w3-p3]}A1^*\,A2^* + 6\,A2\,A3\,e^{-i[t\,w2-p2]}A3^* + 3\,A3^2\,e^{-i[t\,w3-p3]}A3^* +$$
$$\boxed{3\,A2^2\,e^{i[t\,w3-p3]-2\,i[t\,w2-p2]}A3^*} + 3\,e^{i[t\,w1-p1]+i[t\,w3-p3]}(A1^*)^2\,A3^* + 3\,e^{i[t\,w2-p2]+i[t\,w3-p3]}(A2^*)^2\,A3^* +$$
$$6\,A3\,e^{i[t\,w1-p1]}A1^*\,A3^* + 6\,A2\,e^{i[t\,w1-p1]-i[t\,w2-p2]+i[t\,w3-p3]}A1^*\,A3^* + 6\,A3\,e^{i[t\,w2-p2]}A2^*\,A3^* + 6\,A2\,e^{i[t\,w3-p3]}A2^*\,A3^* +$$
$$6\,e^{i[t\,w1-p1]+i[t\,w2-p2]+i[t\,w3-p3]}A1^*\,A2^*\,A3^*$$

The strong and important terms for the FWM are highlighted (complex conjugates not included), which has new frequencies and phases of:

| $2\omega_1 - \omega_2$ ; $2\varphi_1 - \varphi_2$ | $\omega_1 - 2\omega_2$ ; $\varphi_1 - 2\varphi_2$ | $\omega_2 - 2\omega_3$ ; $\varphi_2 - 2\varphi_3$ |
|---|---|---|
| $2\omega_1 - \omega_3$ ; $2\varphi_1 - \varphi_3$ | $\omega_1 - 2\omega_3$ ; $\varphi_1 - 2\varphi_3$ | $2\omega_2 - \omega_3$ ; $2\varphi_2 - \varphi_3$ |
| $\omega_1 - \omega_2 + \omega_3$ ; $\varphi_1 - \varphi_2 + \varphi_3$ | $\omega_1 - \omega_2 - \omega_3$ ; $\varphi_1 + \varphi_2 - \varphi_3$ | $\omega_1 - \omega_2 - \omega_3$ ; $\varphi_1 - \varphi_2 - \varphi_3$ |

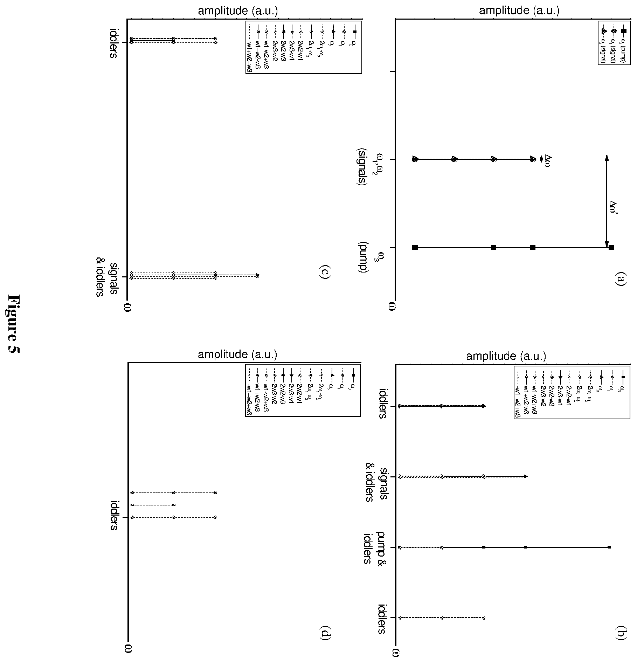

Pump and signals are represented in Figure 5a, and the nine terms generated are represented in figure 5b. In this case, $\omega_2 = \omega_1 + \Delta\omega$ (and consequently $\varphi_2 = \varphi_1 + \Delta\varphi$). Taking into consideration the terms only in the left side of the graph, and zooming in the signals and idlers, it is clear that additional contributions to the signals are generated, creating crosstalk terms. However, if the new idlers are filtered out, only three terms are seen ($2\omega_2$-$\omega_3$, $\omega_1$+$\omega_2$-$\omega_3$, $2\omega_1$-$\omega_3$). Assuming that the ($\omega_1$+$\omega_2$-$\omega_3$) contributions are small; the optical field can be described as:

$$E_{new} = 3A_1^2 A_3^* \cdot e^{-i[(2\omega_1-\omega_3)t-(2\varphi_1-\varphi_3)]} + 3A_2^2 A_3^* \cdot e^{-i[(2\omega_2-\omega_3)t-(2\varphi_2-\varphi_3)]} + c.c.$$

Direct detection is a square-law detection, which provides the terms:

$$\boxed{2 f g^* e^{i[t wg-pg]-i[t wf-pf]}} + \boxed{2 g f^* e^{i[t wf-pf]-i[t wg-pg]}} + 2 f^* g^* e^{i[t wf-pf]+i[t wg-pg]} + (f^*)^2 e^{2 i[t wf-pf]} +$$

$$(g^*)^2 e^{2 i[t wg-pg]} + f^2 e^{-2 i[t wf-pf]} + 2 f g e^{-i[t wf-pf]-i[t wg-pg]} + g^2 e^{-2 i[t wg-pg]} + 2 f f^* + 2 g g^*$$

For simplicity, wg represents $2\omega_1$-$\omega_3$ (and $pg = 2\varphi_1$-$\varphi_3$), wf is $2\omega_2$-$\omega_3$ (and $pf = 2\varphi_1$-$\varphi_3$), g is $3A_1^2 A_3^*$ and f is $3A_2^2 A_3^*$. Higher frequency terms will not be detected, and DC components can be filtered out, leaving, therefore, the terms highlighted above. For $\omega_2$=$\omega_1$+$\Delta\omega$ (and $\varphi_2$=$\varphi_1$+$\Delta\varphi$), the differences in frequency and phase are given by:

$$\omega_g - \omega_f = 2\omega_1 - \omega_3 - 2\omega_2 + \omega_3 = 2\Delta\omega$$

$$\varphi_g - \varphi_f = 2\varphi_1 - \varphi_3 - 2\varphi_2 + \varphi_3 = 2\Delta\varphi$$

From the idler signals it is possible, therefore, to recover the information shared between two signals.

In Coherent WDM, for example, the phase of adjacent subcarriers are $\pi/2$ shifted and the beating between these subcarriers is a clock signal (sine wave) of frequency $f=\Delta\omega/2\pi$. Therefore the scheme described above should recover both clock signal and phase information between adjacent channels, with possible implementations in carrier and clock recovery units, phase optimisation schemes, amongst others, examples of which are described in more detail below.

Figure 5 is a representation of signals and pump, and four wave mixing (FWM) process.

4. Carrier and Phase Recovery

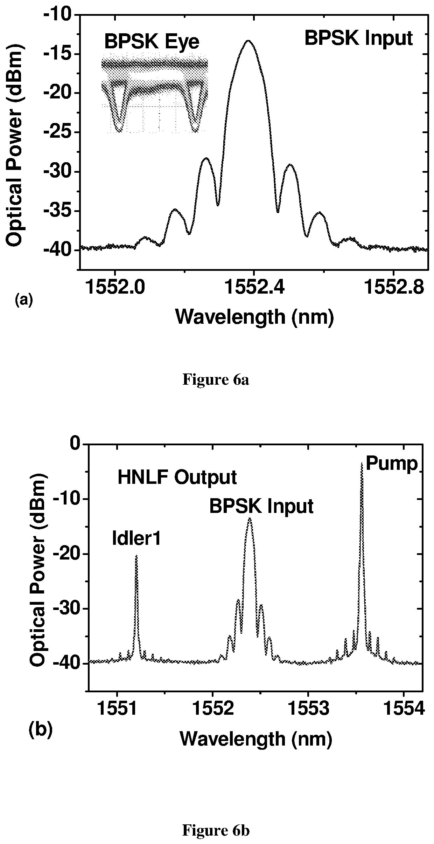

If a non-return to zero binary phase shift keying (NRZ-BPSK) signal ($E_s$, $\omega_s$, $\varphi_s$), for example as in Figure 6, and CW pump ($E_p$, $\omega_p$, $\varphi_p$) are launched to a highly non-linear medium, FWM can generate two idlers waves with amplitude ($E_{ix}$), frequency ($\omega_{ix}$) and phase ($\varphi_{ix}$) relationships shown below, as previously.

$$\omega_{i1} = (2\omega_s - \omega_p), \varphi_{i1} = (2\varphi_s - \varphi_p)$$

$$\omega_{i2} = (2\omega_p - \omega_s), \varphi_{i2} = (2\varphi_p - \varphi_s)$$

Figure 6 shows (a) the input BPSK spectrum to the HNLF, and (b) FWM spectrum at HNLF output.

In general, a BPSK signal does not have a carrier, but consists of {0, $\pi$} phase encoded data (Figure 6a). For each data "0" the contribution to the idler1 phase from the BPSK data is always "0" and for each data "$\pi$" the idler1 phase contribution is "$2\pi$", which is equivalent to "0" and the signal BPSK modulation is essentially stripped from the idler.

Therefore the FWM idler1 phase always tracks the carrier phase of the signal and this recovered idler1 component (Figure 6b) can be used, for example, to injection lock a discrete mode-locked laser (DML). As the output from the DML and the original pump are symmetrically spaced frequencies with respect to the input BPSK signal it may be used, for example, as pumps in subsequent phase sensitive amplification process.

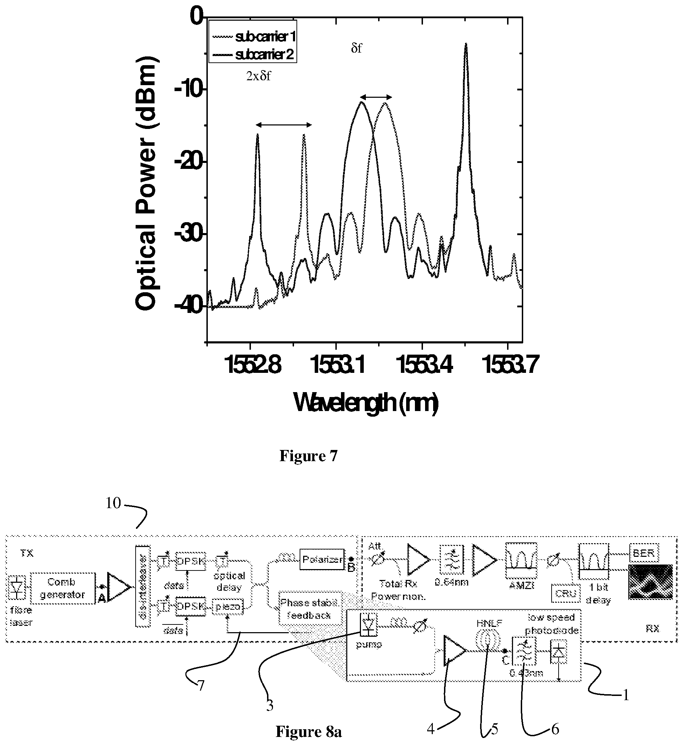

In the case of a multi-carrier system such as Coherent WDM or OFDM, such scheme could also be implemented. Figure 7 shows an illustration for multiple carrier-less data signals (two subcarriers) separated by $\delta f$. The maths for such system is described above. The detected idlers not only recovered the carrier, but also the beating signal between adjacent idlers is sensitive to the phase of the input signals, making the ideal error signal for phase sensitive applications.

For example, this beating signal (or a down-converted signal) could be used as a clock recovery, if phase locking is also present. It can be implemented as a synchronous clock for an optical gating, in addition to synchronisation of the entire switch node.

This clock recovery can also have another important application for digital OFDM, as a series of idlers from the OFDM subcarriers could be implemented as synchronous sampling at the receiver.

It will be appreciated that the invention provides a use of the carrier-recovered signals to recover the clock from a multi-carrier system, carrier and clock recovery for a multi-carrier remote switching node, carrier and clock recovery for sampling synchronisation of OFDM signals, clock recovery for burst mode receivers, a carrier-less signal (centred at $f_0$ or $\omega_0$) to be converted into a carrier-enabled one by FWM, and use of FWM in a nonlinear medium for carriers-recovery of a multi-carrier system.

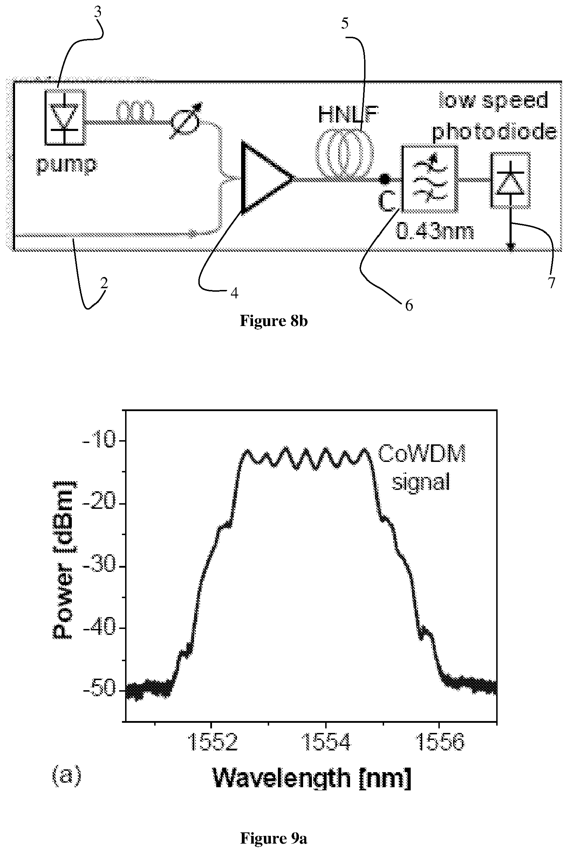

In another embodiment of the invention there is provided a CoWDM system illustrated in Figures 8a and 8b. Figure 8a shows the implementation of an embodiment of the invention as part of a phase stabilisation feedback loop similar to the carrier and clock recovery scheme 1 of Figure 1 for a transmitter (TX) 10. The embodiment shows the transmitter 10 comprises a laser, followed by a comb generator which created seven subcarriers separated by a clock frequency, for example 42.66GHz. The output of which can be optically amplified by an amplifier and subsequently odd and even subcarriers are separated by a dis-interleaver and independently data encoded with a DPSK format. The subcarriers were then re-combined passively, and a feedback circuit ensured that the phase relationship between adjacent subcarriers were maintained the same as in point A, i.e., $\pi/2$ in this particular case as they are orthogonal. The output signal at point B is shown in Figure 9a.

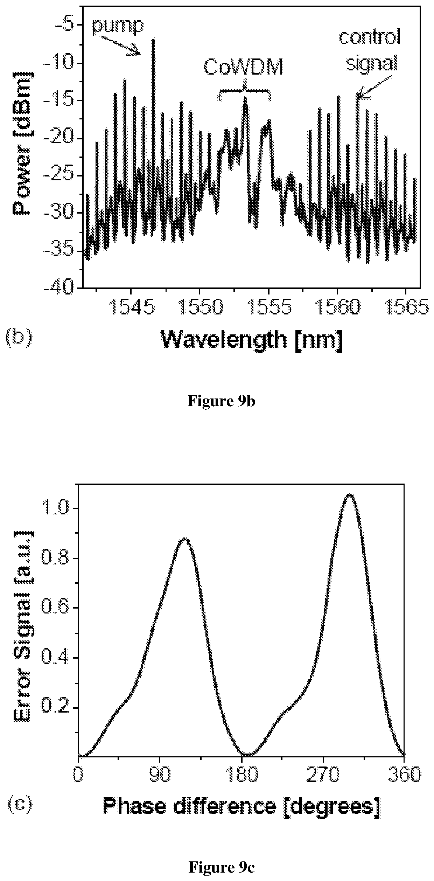

The feedback circuit loop 1 embodies the invention illustrated in Figures 8a and 8b. The feedback circuit of Figure 8a is shown in more detail in Figure 8b. The full signal 2 (7 subcarriers or one Coherent WDM band) can be passively combined with a pump cw signal, provided by a laser 3. An optional high power Erbium doped optical amplifier 4 (EDFA) can provide the optical powers required to induce four-wave mixing within the highly non-linear fibre (HNLF) 5. The signal at point C is shown in Figure 9b. As the system is only interested in the carrier and clock recoveries, the signal is filtered by the filter 6 in order to obtain only the FWM idlers with the aid of a band-pass filter. This signal can then be detected by a low speed photodiode. The directed detected signal 7 has a square-law response, and therefore its output is dependent on the intensity at a given time. This signal can therefore be used as an error signal. In other words if there were no changes in the relative phases between subcarriers, no change will be observed at this signal. If there were changes in the relative phases, the intensity dependence should be as per the results simulated in VPI TransmissionMaker and shown in Figure 9c.

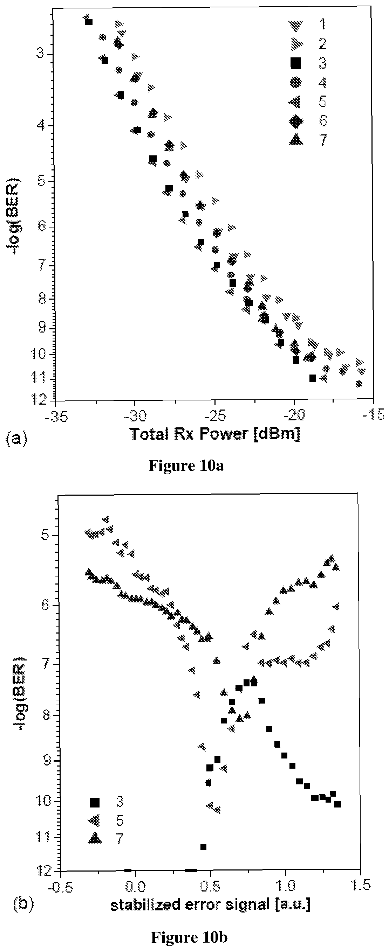

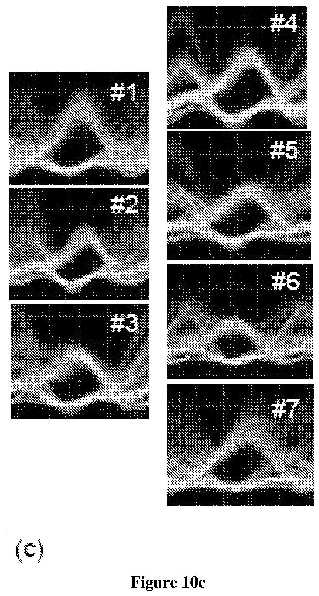

In order to have quantitative measurements to illustrate the invention, bit-error rate measurements (BER) were taken through a commonly used direct-detected optical receiver (RX), the results of which are shown in Figure 10. Here, an attenuator was used to select the total power that was inserted to the receiver, an EDFA to maintain the optical power level within the remaining receiver, two optical filters (bandpass 0.64nm and an asymmetric Mach-Zehnder Interferometer or AMZI) to select each individual subcarrier with another EDFA to compensate for the filter losses, followed by a 1-bit delay to convert the signal from DPSK to NRZ and finally photo-detectors for eye-diagram and BER monitoring.

Figures 10(a) to (c) shows the BER results obtained for all seven subcarriers using this method, showing no error floors due to the phase variations within the transmitter, proving that the phase stabilisation feedback loop is effective for providing a phase stabilisation feedback for the carrier-less signal. In the examples shown the BER curves were measured for each subcarrier carrying 42.66 Gbit/s DPSK data and are shown in Fig. 10 (a). An average receiver sensitivity of ~21 dBm (total power) was measured over seven subcarriers (numbered from 1 to 7 with increasing wavelength). The BER curve measurements were performed for a single optimized phase condition giving the best average BER. In this condition, error free operation was simultaneously observed for all seven subcarriers. Figure 3(b) illustrates the impact of variation in the relative phases between adjacent subcarriers on the BER. Three subcarriers (# 3, 5 and 7) were characterized as a function of the stabilized phase for a fixed received total power of - 20 dBm. Whilst the optimum phase condition corresponded to a stabilized error signal of +0.56, it can be clearly observed that the optimum phase was different for each subcarrier. The choice of a single phase difference, with alternating positive and negative phase steps between the odd and even sets of subcarriers, gives rise to the spread in receiver sensitivities observed in Fig. 10 (a). In Fig. 10 (c) the eye diagrams of each subcarrier are shown, for a maximum total received power and for the optimized phase condition used for BER measurements in Fig. 10 (a).

The embodiments in the invention described with reference to the drawings comprise a computer apparatus and/or processes performed in a computer apparatus or any Digital Signal Processing (DSP) circuit. The invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A multi-carrier system for use in an optical network adapted to transmit and/or receive a carrier-less signal, said system comprising :

   means for tapping the carrier-less signal and combining with at least one signal supplied from a laser device (3);
   means for passing the combined signal through a non-linear element (5) to output a plurality of subcarrier signals together with idler components;
   means for filtering the plurality of subcarrier signals to provide subcarriers dependent on the original carrier-less signal; and
   means for recovering a clock signal (7) from the filtered subcarriers;
   wherein the means for recovering further comprises:

   means to detect idler signals and to determine a beating signal between adjacent idler signals sensitive to the phase relationship between the subcarriers of the input signals and to provide an error signal for phase sensitive applications.

2. The multi-carrier system as claimed in claim 1 comprising means for determining the frequency and the phase change between transmitted or received subcarriers from said recovered clock signal (7) and wherein said means for determining comprises a four wave mixer.

3. The multi-carrier system as claimed in claim 1 wherein the filtered signals are dependent on the original frequency of the signal and phase difference between subcarriers such that the clock signal can be recovered or wherein the non-linear element (5) comprises a non-linear optical fibre or a semiconductor optical amplifier or comprising an optical amplifier (4) adapted to amplify the combined signal and passing the amplified combined signal into said non-linear element (5).

4. The multi-carrier system as claimed in any preceding claim comprising means for compensating the signal by using the recovered and processed clock signal (7) for new generation of same frequency spacing subcarriers and phase-locked to an original phase-synchronised signal in the network.

5. The multi-carrier system as claimed in claim 4 wherein the means for compensating comprises a feedback loop to a transmitter (10), and the clock signal (7) is adapted to compensate for fluctuations of both frequency and phase from the original phase-synchronised signal.

6. The multi-carrier system as claimed in claim 4 wherein said means for recovering multiple phase-synchronised subcarriers comprises phase synchronization subsystem and a comb signal generation.

7. The multi-carrier system as claimed in claim 6 wherein the comb generation and phase synchronization subsystem comprises an injection locked laser and cascaded MZ amplitude modulator.

8. The multi-carrier system as claimed in claim 7 wherein the injection locked laser generates at least one new subcarrier signal, which is phase coherent with the recovered carrier signal.

9. The multi-carrier system as claimed in any of claims 6 to 8 wherein the means for generating comprises a PLL circuit adapted to stabilize said subcarriers against unwanted frequency and phase drifts.

10. The multi-carrier system as claimed in any of claims 6 to 9 wherein the laser (3) is adapted to generate a comb spectrum and phase synchronized by an optical PLL circuit.

11. The multi-carrier system as claimed in claim 6,

wherein the phase synchronization subsystem comprises an optical PLL circuit comprising a single sideband modulator adapted to synchronize simultaneously the subcarrier signals.

12. The multi-carrier system as claimed in any preceding claim comprising an OFDM regenerator and/or comprising a frequency slot allocation interchanger and/or comprises a four wave mixer adapted to recover phase information from adjacent subcarriers enabling generation of an error signal for phase optimisation.

13. A method for use in an optical network adapted to transmit and/or receive signals, said method comprising the steps of:

tapping the carrier-less signal and combining with at least one signal supplied from a laser device (3);
passing the combined signal through a non-linear element to output a plurality of subcarrier signals together with idler components ;
filtering the plurality of subcarrier signals to provide subcarriers dependent on the original carrier-less signal; and
recovering a clock signal (7) from the filtered subcarriers;
wherein the recovering step further comprises:

detecting idler signals and determining a beating signal between adjacent idler signals sensitive to the phase relationship between subcarriers of the input signals and providing an error signal for phase sensitive applications.

**Patentansprüche**

1. Mehrträgersystem zur Verwendung in einem optischen Netzwerk, ausgelegt zum Senden und/oder Empfangen eines trägerlosen Signals, wobei das genannte System Folgendes umfasst:

Mittel zum Abgreifen des trägerlosen Signals und zum Kombinieren mit wenigstens einem von einem Lasergerät (3) zugeführten Signal;
Mittel zum Leiten des kombinierten Signals durch ein nichtlineares Element (5) zum Ausgeben einer Mehrzahl von Subträgersignalen zusammen mit inaktiven Komponenten;
Mittel zum Filtern der Mehrzahl von Subträgersignalen zum Bereitstellen von Subträgern in Abhängigkeit von dem ursprünglichen trägerlosen Signal; und
Mittel zum Zurückgewinnen eines Taktsignals (7) von den gefilterten Subträgern;

wobei das Mittel zum Zurückgewinnen ferner Folgendes umfasst:

Mittel zum Erkennen von inaktiven Signalen und zum Bestimmen eines aktiven Signals zwischen benachbarten inaktiven Signalen, empfindlich für die Phasenbeziehung zwischen den Subträgern der Eingangssignale, und zum Bereitstellen eines Fehlersignals für phasenempfindliche Anwendungen.

2. Mehrträgersystem nach Anspruch 1, das Mittel zum Bestimmen der Frequenz und der Phasenänderung zwischen gesendeten oder empfangenen Subträgern von dem genannten zurückgewonnenen Taktsignal (7) umfasst, und wobei das genannte Mittel zum Bestimmen einen Vierwellenmischer umfasst.

3. Mehrträgersystem nach Anspruch 1, wobei die gefilterten Signale von der ursprünglichen Frequenz des Signals und der Phasendifferenz zwischen Subträgern abhängig sind, so dass das Taktsignal zurückgewonnen werden kann, oder
wobei das nichtlineare Element (5) eine nichtlineare optische Faser oder einen optischen Halbleiterverstärker umfasst, oder
einen optischen Verstärker (4) umfasst, ausgelegt zum Verstärken des kombinierten Signals und zum Leiten des verstärkten kombinierten Signals in das genannte nichtlineare Element (5).

4. Mehrträgersystem nach einem vorherigen Anspruch, das Mittel zum Kompensieren des Signals durch Verwenden des zurückgewonnenen und verarbeiteten Taktsignals (7) für ein erneutes Erzeugen von Subträgern mit demselben Frequenzabstand und auf ein ursprüngliches phasensynchronisiertes Signal in dem Netzwerk phasenverriegelt umfasst.

5. Mehrträgersystem nach Anspruch 4, wobei das Mittel zum Kompensieren eine Rückkopplungsschleife zu einem Sender (10) umfasst und das Taktsignal (7) zum Kompensieren von Schwankungen von Frequenz und Phase von dem ursprünglichen phasensynchronisierten Signal ausgelegt ist.

6. Mehrträgersystem nach Anspruch 4, wobei das genannte Mittel zum Zurückgewinnen mehrerer phasensynchronisierter Subträger ein Phasensynchronisationssubsystem und eine Kammsignalerzeugung umfasst.

7. Mehrträgersystem nach Anspruch 6, wobei das Kammerzeugungs- und Phasensynchronisationssubsystem einen injektionsverriegelten Laser und einen kaskadierten MZ-Amplituden-Modulator umfasst.

8. Mehrträgersystem nach Anspruch 7, wobei der injektionsverriegelte Laser wenigstens ein neues Subträgersignal erzeugt, das phasenkohärent mit dem zurückgewonnenen Trägersignal ist.

9. Mehrträgersystem nach einem der Ansprüche 6 bis 8, wobei das Mittel zum Erzeugen eine PLL-Schaltung umfasst, ausgelegt zum Stabilisieren der genannten Subträger gegen unerwünschte Frequenz- und Phasenverschiebungen.

10. Mehrträgersystem nach einem der Ansprüche 6 bis 9, wobei der Laser (3) zum Erzeugen eines/r Kammspektrums und -phase ausgelegt ist, synchronisiert durch eine optische PLL-Schaltung.

11. Mehrträgersystem nach Anspruch 6, wobei das Phasensynchronisationssubsystem eine optische PLL-Schaltung umfasst, die einen einzelnen Seitenbandmodulator umfasst, ausgelegt zum gleichzeitigen Synchronisieren der Subträgersignale.

12. Mehrträgersystem nach einem vorherigen Anspruch, das einen OFDM-Regenerator umfasst und/oder einen Frequenzfensterzuordnungswechsler umfasst und/oder einen Vierwellenmischer umfasst, ausgelegt zum Zurückgewinnen von Phaseninformationen von benachbarten Subträgern, so dass ein Fehlersignal zur Phasenoptimierung erzeugt werden kann.

13. Verfahren zur Anwendung in einem optischen Netzwerk, ausgelegt zum Senden und/oder Empfangen von Signalen, wobei das genannte Verfahren die folgenden Schritte beinhaltet:

   Abgreifen des trägerlosen Signals und Kombinieren mit wenigstens einem von einem Lasergerät (3) zugeführten Signal;
   Leiten des kombinierten Signals durch ein nichtlineares Element zum Ausgeben einer Mehrzahl von Subträgersignalen zusammen mit inaktiven Komponenten;
   Filtern der Mehrzahl von Subträgersignalen zum Bereitstellen von Subträgern in Abhängigkeit vom ursprünglichen trägerlosen Signal; und
   Zurückgewinnen eines Taktsignals (7) von den gefilterten Subträgern;

   wobei der Zurückgewinnungsschritt ferner Folgendes beinhaltet:

   Erkennen von inaktiven Signalen und Bestimmen eines aktiven Signals zwischen benachbarten inaktiven Signalen, empfindlich für die Phasenbeziehung zwischen Subträgern der Eingangssignale, und Bereitstellen eines Fehlersignals für phasenempfindliche Anwendungen.

**Revendications**

1. Un système à porteuses multiples destiné à une utilisation dans un réseau optique adapté de façon à émettre et/ou recevoir un signal sans porteuse, ledit système comprenant :

   un moyen de prélèvement du signal sans porteuse et de combinaison à au moins un signal fourni à partir d'un dispositif laser (3),
   un moyen de passage du signal combiné au travers d'un élément non linéaire (5) de façon à produire en sortie une pluralité de signaux de sous-porteuse conjointement avec composants idler,
   un moyen de filtrage de la pluralité de signaux de sous-porteuse de façon à fournir des sous-porteuses qui dépendent du signal sans porteuse d'origine, et
   un moyen de récupération d'un signal d'horloge (7) à partir des sous-porteuses filtrées,

où le moyen de récupération comprend en outre :

un moyen de détection de signaux idler et de détermination d'un signal de battement entre des signaux idler adjacents sensibles à la relation de phase entre les sous-porteuses des signaux en entrée et de fourniture d'un signal d'erreur pour des applications sensibles à la phase.

2. Le système à porteuses multiples selon la Revendication 1 comprenant un moyen de détermination de la fréquence et du changement de phase entre des sous-porteuses émises ou reçues à partir dudit signal d'horloge récupéré (7) et où ledit moyen de détermination comprend un mélangeur à quatre ondes.

3. Le système à porteuses multiples selon la Revendication 1 où les signaux filtrés dépendent de la fréquence d'origine du signal et de la différence de phase entre sous-porteuses de sorte que le signal d'horloge puisse être récupéré, ou où l'élément non linéaire (5) comprend une fibre optique non linéaire ou un amplificateur optique à semiconducteurs, ou comprenant un amplificateur optique (4) adapté de façon à amplifier le signal combiné et le passage du signal combiné amplifié dans ledit élément non linéaire (5).

4. Le système à porteuses multiples selon l'une quelconque des Revendications précédentes comprenant un moyen de compensation du signal par l'utilisation du signal d'horloge récupéré et traité (7) pour une nouvelle génération de sous-porteuses à espacement de fréquence identique et verrouillé en phase sur un signal synchronisé en phase d'origine dans le réseau.

5. Le système à porteuses multiples selon la Revendication 4 où le moyen de compensation comprend une boucle de rétroaction vers un émetteur (10), et le signal d'horloge (7) est adapté de façon à compenser des fluctuations à la fois de fréquence et de phase à partir du signal synchronisé en phase d'origine.

6. Le système à porteuses multiples selon la Revendication 4 où ledit moyen de récupération d'une pluralité de sous-porteuses synchronisées en phase comprend un sous-système de synchronisation de phase et une génération de signal en peigne.

7. Le système à porteuses multiples selon la Revendication 6 où le sous-système de génération en peigne et de synchronisation de phase comprend un laser à verrouillage par injection et un modulateur d'amplitude MZ en cascade.

8. Le système à porteuses multiples selon la Revendication 7 où le laser à verrouillage par injection génère au moins un nouveau signal de sous-porteuse qui est cohérent en phase avec le signal de porteuse récupéré.

9. Le système à porteuses multiples selon l'une quelconque des Revendications 6 à 8 où le moyen de génération comprend un circuit PLL adapté de façon à stabiliser lesdites sous-porteuses vis-à-vis de dérives de phase et de fréquence indésirables.

10. Le système à porteuses multiples selon l'une quelconque des Revendications 6 à 9 où le laser (3) est adapté de façon à générer un spectre à peigne et est synchronisé en phase par un circuit PLL optique.

11. Le système à porteuses multiples selon la Revendication 6,
où le sous-système de synchronisation de phase comprend un circuit PLL optique comprenant un modulateur de bande latérale unique adapté de façon à synchroniser simultanément les signaux de sous-porteuse.

12. Le système à porteuses multiples selon l'une quelconque des Revendications précédentes comprenant un régénérateur OFDM et/ou comprenant un échangeur d'attribution d'intervalle de fréquence et/ou comprenant un mélangeur à quatre ondes adapté de façon à récupérer des informations de phase à partir de sous-porteuses adjacentes permettant la génération d'un signal d'erreur pour une optimisation de phase.

13. Un procédé destiné à une utilisation dans un réseau optique adapté de façon à émettre et/ou recevoir des signaux, ledit procédé comprenant les opérations suivantes :

le prélèvement du signal sans porteuse et la combinaison avec au moins un signal fourni à partir d'un dispositif laser (3),
le passage du signal combiné au travers d'un élément non linéaire de façon à produire en sortie une pluralité de signaux de sous-porteuse conjointement avec des composants idler,

le filtrage de la pluralité de signaux de sous-porteuse de façon à fournir des sous-porteuses qui dépendent du signal sans porteuse d'origine, et

la récupération d'un signal d'horloge (7) à partir des sous-porteuses filtrées,

où l'opération de récupération comprend en outre :

la détection de signaux idler et la détermination d'un signal de battement entre des signaux idler adjacents sensibles à la relation de phase entre des sous-porteuses des signaux en entrée, et la fourniture d'un signal d'erreur pour des applications sensibles à la phase.

Figure 1

Figure 2a

**Figure 2b**

**Figure 2c**

**Scheme-I**

Figure 3

**Scheme-II**

Figure 4

Figure 5

Figure 6a

Figure 6b

Figure 7

Figure 8a

**Figure 8b**

**Figure 9a**

**Figure 9b**

**Figure 9c**

Figure 10a

Figure 10b

(c)

Figure 10c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9619056 PCT
- US 2005180760 A, Feced
- US 2009190929 A, Khurgin
- US 2003219258 A

### Non-patent literature cited in the description

- **SHIEH W. et al.** Experimental Demonstration of transmission of Coherent Optical OFDM Systems. OFC, 2007